# EUROPÄISCHE PATENTSCHRIFT

(11) **EP 3 985 565 B1**
(45) Veröffentlichungstag und Bekanntmachung des Hinweises auf die Patenterteilung: **11.03.2026**
(21) Anmeldenummer: 21197298.9
(22) Anmeldetag: 16.09.2021
(51) Int. Cl.: G06N 3/02, G06N 5/045, G06F 11/3668, G07C 5/08

(54) **VERFAHREN UND VORRICHTUNG ZUM ÜBERPRÜFEN EINES BEIM TEILAUTOMATISIERTEN ODER VOLLAUTOMATISIERTEN STEUERN EINES FAHRZEUGS VERWENDETEN KI-BASIERTEN INFORMATIONSVERARBEITUNGSSYSTEMS**
METHOD AND DEVICE FOR CHECKING AN AI-BASED INFORMATION PROCESSING SYSTEM USED IN PARTIALLY AUTOMATED OR FULLY AUTOMATED CONTROL OF A VEHICLE
PROCÉDÉ ET DISPOSITIF DE VÉRIFICATION D'UN SYSTÈME DE TRAITEMENT D'INFORMATIONS BASÉ SUR L'IA UTILISÉ LORS DE LA COMMANDE PARTIELLEMENT AUTOMATISÉE OU ENTIÈREMENT AUTOMATISÉE D'UN VÉHICULE

(30) Priorität: 15.10.2020 DE 102020213057
(43) Veröffentlichungstag der Anmeldung: 20.04.2022
(73) Patentinhaber: VOLKSWAGEN AG, 38440 Wolfsburg (DE)
(72) Erfinder: Hüger, Fabian, 38302 Wolfenbüttel (DE); Schlicht, Peter, 38442 Wolfsburg (DE); Schmidt, Nico Maurice, 10713 Berlin (DE)

(56) Entgegenhaltungen:
- CHENG CHIH-HONG ET AL: "Runtime Monitoring Neuron Activation Patterns", 19 September 2018 (2018-09-19), arXiv.org, pages 1 - 4, XP055897302, Retrieved from the Internet <URL:https://arxiv.org/pdf/1809.06573.pdf> [retrieved on 20220303]
- NYSTROM D ET AL: "Data management issues in vehicle control systems: a case study", REAL-TIME SYSTEMS, 2002. PROCEEDINGS. 14TH EUROMICRO CONFERENCE ON 19-21 JUNE 2002, PISCATAWAY, NJ, USA,IEEE, 19 June 2002 (2002-06-19), pages 221 - 228, XP010592757, ISBN: 978-0-7695-1665-3

## Beschreibung

Die Erfindung betrifft ein Verfahren und eine Vorrichtung zum Überprüfen eines beim teilautomatisierten oder vollautomatisierten Steuern eines Fahrzeugs verwendeten Kl-basierten Informationsverarbeitungssystems.

Maschinelles Lernen, beispielsweise auf Grundlage von Neuronalen Netzen, hat großes Potenzial für eine Anwendung in modernen Fahrerassistenzsystemen und automatisiert fahrenden Fahrzeugen. Auf tiefen Neuronalen Netzen basierende Funktionen verarbeiten hierbei Sensordaten (zum Beispiel von Kameras, Radar- oder Lidarsensoren), um hieraus relevante Informationen abzuleiten. Diese Informationen umfassen zum Beispiel eine Art und eine Position von Objekten in einem Umfeld des Kraftfahrzeugs, ein Verhalten der Objekte oder eine Fahrbahngeometrie oder -topologie.

Ein wesentliches Merkmal bei der Entwicklung von Kl-basierten Informationsverarbeitungssystemen (dem Training) liegt im rein datengetriebenen Parameterfitting ohne Experteneingriff. Beispielsweise bei tiefen Neuronalen Netzen wird hierbei eine Abweichung einer Ausgabe (für eine gegebene Parametrierung) des Neuronalen Netzes von einer Grundwahrheit (engl. ground truth) bestimmt (der sogenannte Loss). Die hierbei verwendete Lossfunktion wird in einer Weise gewählt, dass die Parameter des Neuronalen Netzes differenzierbar von dieser abhängen. Im Rahmen des Gradientenabstiegsverfahrens werden in jedem Trainingsschritt die Parameter des Neuronalen Netzes in Abhängigkeit der Ableitung der (auf mehreren Beispielen ermittelten) Abweichung angepasst. Diese Trainingsschritte werden sehr oft wiederholt, bis sich der Loss nicht mehr verringert.

Bei diesem Vorgehen werden die Parameter eines Kl-basierten Informationsverarbeitungssystems, insbesondere eines Neuronalen Netzes, ohne eine Experteneinschätzung oder eine semantisch motivierte Modellierung ermittelt. Dies kann wesentliche Folgen für die Eigenschaften des Kl-basierten Informationsverarbeitungssystems, insbesondere des Neuronalen Netzes, nach sich ziehen.

Insbesondere sind tiefe Neuronale Netze für den Menschen weitgehend intransparent und ihre Berechnungen nicht interpretierbar. Dies stellt eine massive Einschränkung für ein systematisches Testen oder eine formale Überprüfung dar.

Ferner sind insbesondere tiefe Neuronale Netze anfällig für schädliche Störeinflüsse, sogenannte adversariale Störungen (engl. adversarial perturbations): kleine, für den Menschen kaum wahrnehmbare oder einen semantischen Inhalt nicht verändernde Manipulationen an den Eingangsdaten können zu komplett anderen Ausgangsdaten führen. Solche Manipulationen können sowohl mutwillig herbeigeführte Veränderungen der Daten ("Neural Hacking") als auch zufällig auftretende Bildveränderungen (Sensorrauschen, Witterungseinflüsse, bestimmte Farben oder Kontraste) sein.

Ferner ist insbesondere unklar, auf welche Eingangsmerkmale ein Neuronales Netz sensibilisiert. Dies sorgt dafür, dass synthetisch, beispielsweise durch Simulation, erzeugte Daten bisher kaum erfolgreich für das Training von Neuronalen Netzen verwendet werden können: in Simulation oder auf anderweitig synthetischen Daten trainierte Neuronale Netze weisen eine erstaunlich schwache Performanz auf reellen Sensordaten auf. Auch eine Ausführung von Neuronalen Netzen in einer anderen Datendomäne (Training im Sommer, Ausführung im Winter etc.) reduziert die funktionale Güte teilweise drastisch. Dies hat u.a. zur Folge, dass die vom Kostenstandpunkt aus sehr attraktiv klingende Möglichkeit der Entwicklung und Freigabe von Neuronalen Netzen in Simulation (Entfall teuren Labellings und aufwendiger Realtests) nicht realistisch scheint.

Insbesondere der zweite Punkt hat starke Bedeutung für eventuelle Einschränkungen potenter Neuronaler Netze im Bereich funktionaler Sicherheit. Um letztere zu messen ist es wünschenswert, eine Einschätzung der Robustheit der Netzausführung gegenüber geringfügigen Veränderungen (z.B. Augmentierungen) der Eingangsdaten zu messen. Da solche Änderungen mannigfaltig sein können (Sensorrauschen, Witterungseinflüsse, Bildmanipulationen, semantisch nicht bedeutungsvolle Inhaltsveränderungen, z.B. der Wandfarbe von Hintergrundgebäuden), gibt es kein eindeutiges und akzeptiertes Maß für die Robustheit. Vielmehr können viele Robustheitswerte gegen Störungen (z.B. Augmentierungen) verschiedener Art und Intensität gemessen werden. Weiter ist die Robustheit Neuronaler Netze keine absolute Größe, sondern vielmehr von aktuellen Eingangsdaten abhängig.

Darüber hinaus gestaltet es sich als schwierig, Kl-basierte Informationsverarbeitungssysteme zu erzeugen, die gegenüber allen erforderlichen Störungen robust sind. Zusätzlich ist ein Raum möglicher Störungen unendlich, sodass während eines Betriebs eines Fahrzeugs neuartige Störungen auftreten können.

Aus der DE 10 2018 218 586 A1 ist ein Verfahren zum Erzeugen robuster automatisch lernender Systeme und Testen trainierter automatisch lernender Systeme bekannt.

Aus Chih-Hong Cheng et al., Runtime Monitoring Neuron Activation Patterns, arXiv:1809.06573 , 19. September 2018 (2018-09-19), ist ein Verfahren zum Überprüfen von Aktivierungsmustern eines Neuronalen Netzes bekannt.

Aus D. Nyström et al., Data Management Issues in Vehicle Control Systems: a Case Study, Proceedings of the 14th Euromicro Conference on Real-Time Systems (ECRTS 2002), 19.-21. Juni 2002, Wien, Österreich, http://dx.doi.org/10.1109/EMRTS.2002.1019205, ist eine Studie zur Integration einer Datenbank in den Informationsfluss von Steuergeräten bekannt. Der Erfindung liegt die Aufgabe zu Grunde, ein Verfahren und eine Vorrichtung zum Überprüfen eines beim teilautomatisierten oder vollautomatisierten Steuern eines Fahrzeugs verwendeten Kl-basierten Informationsverarbeitungssystems zu schaffen, mit denen insbesondere ein kontinuierliches Pflegen und/oder Aktualisieren einer Datenbasis möglich ist.

Die Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen. Insbesondere wird ein Verfahren zum Überprüfen eines beim teilautomatisierten oder vollautomatisierten Steuern eines Fahrzeugs verwendeten KI-basierten Informationsverarbeitungssystems zur Verfügung gestellt, wobei mindestens ein Sensor des Fahrzeugs Sensordaten zur Umfelderfassung bereitstellt, mittels eines in einem ersten Steuergerät des Fahrzeugs angeordneten Kl-basierten Informationsverarbeitungssystems die erfassten Sensordaten ausgewertet werden und ausgehend von den ausgewerteten Sensordaten mindestens eine Ausgabe zum teilautomatisierten oder vollautomatisierten Steuern des Fahrzeugs erzeugt wird und einer Steuereinheit des Fahrzeugs bereitgestellt wird, wobei mittels einer in einem zweiten Steuergerät des Fahrzeugs angeordneten Testeinrichtung das Kl-basierte Informationsverarbeitungssystem mittels mindestens eines Testverfahrens überprüft wird, und wobei ein Testergebnis des mindestens einen Testverfahrens mit einer Referenz zum getesteten Kl-basierten Informationsverarbeitungssystem und zum verwendeten mindestens einen Testverfahren in einer multidimensionalen Datenstruktur in einer im Fahrzeug angeordneten Datenbank gespeichert wird.

Ferner wird insbesondere eine Vorrichtung zum Überprüfen eines beim teilautomatisierten oder vollautomatisierten Steuern eines Fahrzeugs verwendeten Kl-basierten Informationsverarbeitungssystems geschaffen, mit zumindest einem Sensor, der dazu eingerichtet ist, Sensordaten zur Umfelderfassung einer Umgebung des Fahrzeugs bereitzustellen, einem in einem ersten Steuergerät des Fahrzeugs angeordneten Kl-basierten Informationsverarbeitungssystem, welches dazu eingerichtet ist, die erfassten Sensordaten auszuwerten und ausgehend von den ausgewerteten Sensordaten mindestens eine Ausgabe zum teilautomatisierten oder vollautomatisierten Steuern des Fahrzeugs zu erzeugen und bereitzustellen, einer Steuereinheit, die die bereitgestellte Ausgabe als Steuerparameter zum teilautomatisierten oder vollautomatisierten Steuern des Fahrzeugs verwendet, und einer in einem zweiten Steuergerät des Fahrzeugs angeordneten Testeinrichtung, welche dazu eingerichtet ist, das Kl-basierte Informationsverarbeitungssystem mittels mindestens eines Testverfahrens zu überprüfen, und ein Testergebnis des mindestens einen Testverfahrens mit einer Referenz zum getesteten Kl-basierten Informationsverarbeitungssystem und zum verwendeten mindestens einen Testverfahren in einer multidimensionalen Datenstruktur in einer im Fahrzeug angeordneten Datenbank zu speichern.

Das Verfahren und die Vorrichtung ermöglichen es, ein beim teilautomatisierten oder vollautomatisierten Steuern eines Fahrzeugs verwendetes KI-basiertes Informationsverarbeitungssystem während des Anwendens zu überprüfen und hierdurch eine Datenbasis zum Überprüfen und Bewerten des Kl-basierten Informationsverarbeitungssystems zu erweitern und/oder zu aktualisieren. Insbesondere kann ein Bewerten des Kl-basierten Informationsverarbeitungssystems hinsichtlich einer Robustheit zu einem späteren Zeitpunkt erfolgen, indem auf die in der multidimensionalen Datenstruktur hinterlegten Testergebnisse zurückgegriffen wird. Während des Anwendens des Kl-basierten Informationsverarbeitungssystems ist daher vorgesehen, dass das Kl-basierte Informationsverarbeitungssystem mittels mindestens eines Testverfahrens überprüft wird. Ein Testergebnis des mindestens einen Testverfahrens wird in einer multidimensionalen Datenstruktur in einer im Fahrzeug angeordneten Datenbank hinterlegt, wobei eine Verknüpfung mit einer Referenz zum getesteten Kl-basierten Informationsverarbeitungssystem und zum verwendeten mindestens einen Testverfahren erfolgt, sodass das Testergebnis später zum Überprüfen und/oder Bewerten des KI-basierten Informationsverarbeitungssystems verwendet werden kann und gezielt hierfür aus der multidimensionalen Datenstruktur abgerufen werden kann.

Ein Vorteil des Verfahrens und der Vorrichtung ist, dass ein Überprüfen und ein Sammeln von Testergebnissen für beim teilautomatisierten oder vollautomatisierten Steuern eines Fahrzeugs verwendete KI-basierte Informationsverarbeitungssysteme kontinuierlich beim Anwenden der Kl-basierten Informationsverarbeitungssysteme erfolgen kann. Hierdurch kann eine Datenbasis zum Überprüfen und/oder Bewerten schrittweise und insbesondere kontinuierlich erweitert und/oder aktualisiert werden.

Ein KI-basiertes Informationsverarbeitungssystem ist ein Informationsverarbeitungssystem, das auf einem Verfahren der Künstlichen Intelligenz (KI) basiert. Das Kl-basierte Informationsverarbeitungssystem ist als tiefes Neuronales Netz ausgestaltet. Das mindestens eine KI-basierte Informationsverarbeitungssystem ist insbesondere trainiert und/oder abschließend parametriert. Beispielsweise kann das Kl-basierte Informationsverarbeitungssystem ein trainiertes Neuronales Netz sein. Ein KI-basiertes Informationsverarbeitungssystem umfasst insbesondere eine Strukturbeschreibung und Parameter und/oder ist durch eine Strukturbeschreibung und Parameter definiert.

Ein Testverfahren ist insbesondere ein unüberwachtes Testverfahren, das heißt für eine Ausgabe des Kl-basierten Informationsverarbeitungssystems ist beim Überprüfen keine Grundwahrheit bekannt. Das Testverfahren wird insbesondere derart durchgeführt, dass in einen Ablauf des Kl-basierten Informationsverarbeitungssystems nicht eingegriffen wird bzw. ein solcher nicht verändert wird. Das Testverfahren verhält sich gegenüber dem zu überprüfenden Kl-basierten Informationsverarbeitungssystem insbesondere passiv. Anders ausgedrückt beobachtet das Testverfahren das KI-basierte Informationsverarbeitungssystem nur.

Ein Sensor ist insbesondere eine Kamera, ein Lidarsensor, ein Radarsensor oder ein Ultraschallsensor. Die Sensordaten können ein oder mehrdimensional, insbesondere zwei- oder dreidimensional sein. Ist der Sensor als Kamera ausgebildet, so umfassen die Sensordaten insbesondere zweidimensionale Kamerabilder.

Teile der Vorrichtung, insbesondere das erste Steuergerät, das zweite Steuergerät, die Steuereinheit und/oder die Testeinrichtung, können einzeln oder zusammengefasst als eine Kombination von Hardware und Software ausgebildet sein, beispielsweise als Programmcode, der auf einem Mikrocontroller oder Mikroprozessor ausgeführt wird.

Es kann vorgesehen sein, dass die multidimensionale Datenstruktur bereits besteht und beispielweise von einem zentralen Server an die Vorrichtung übermittelt wird und dort beispielsweise zum Überprüfen und Bewerten einer Robustheit von Kl-basierten Informationsverarbeitungssystemen vor einer Anwendung verwendet wird. Die gemäß des in dieser Offenbarung beschriebenen Verfahrens erzeugten Testergebnisse werden der bereitgestellten multidimensionalen Datenstruktur insbesondere als neuer Eintrag hinzugefügt, sodass die multidimensionale Datenstruktur um die Testergebnisse erweitert wird. Es kann jedoch auch eine Aktualisierung bereits bestehender Einträge bzw. Datenpunkte in der multidimensionalen Datenstruktur erfolgen. Die multidimensionale Datenstruktur ist insbesondere in einer Datenbank gespeichert. Auf dem zentralen Server wird die Datenbank insbesondere als zentrale Datenbank bezeichnet, in der Vorrichtung wird die Datenbank insbesondere als dezentrale Datenbank bezeichnet.

Eine multidimensionale Datenstruktur kann beispielsweise durch die Dimensionen Kl-basiertes Informationsverarbeitungssystem, Datensatz, Datenaugmentierungsdefinition und Differenzmaßdefinition definiert sein. Eine multidimensionale Datenstruktur kann insbesondere auch als Hypercube bezeichnet werden. Die Dimension Kl-basiertes Informationsverarbeitungssystem umfasst als Wertebereich insbesondere alle vorgesehenen Kl-basierten Informationsverarbeitungssysteme (sofern mehr als ein KI-basiertes Informationsverarbeitungssystem vorhanden ist bzw. angewendet und/oder überprüft werden soll). Wenn nur ein Kl-basierten Informationsverarbeitungssystem vorhanden ist bzw. angewendet und/oder überprüft werden soll, kann die Dimension KI-basiertes Informationsverarbeitungssystem auch entfallen. Die Dimension Datensatz umfasst insbesondere als Wertebereich alle vorgesehenen Datensätze, mit denen die in der an die Vorrichtung übermittelten multidimensionalen Datenstruktur referenzierten Kl-basierten Informationsverarbeitungssysteme bereits überprüft wurden. Die Dimension Datenaugmentierungsdefinition umfasst als Wertebereich insbesondere alle Datenaugmentierungsverfahren, mit denen in der multidimensionalen Datenstruktur referenzierte KI-basierte Informationsverarbeitungssysteme zum Überprüfen bereits augmentiert wurden. Die Dimension Differenzmaßdefinition umfasst als Wertebereich insbesondere alle zum Überprüfen bereits verwendeten Differenzmaße. Jeder Kombination von Werten innerhalb dieser Dimensionen ist ein Datenpunkt zugeordnet, der zumindest einen Differenzwert umfasst. Testergebnisse, die mittels des in dieser Offenbarung beschriebenen Verfahrens gewonnen wurden, werden einer solchen multidimensionalen Datenstruktur als Datenpunkte hinzugefügt. Hierbei müssen nicht alle in der multidimensionalen Datenstruktur vorhandenen Dimensionen berücksichtigt werden. Insbesondere liefern die Testverfahren des in dieser Offenbarung beschriebenen Verfahrens keine Differenzwerte, da es sich um unüberwachte Testverfahren handelt. Anders ausgedrückt wird der multidimensionalen Datenstruktur ein erhaltenes Testergebnis insbesondere als mindestens ein neuer Datenpunkt hinzugefügt. Für die unüberwachten Testverfahren weist die multidimensionale Datenstruktur insbesondere die Dimensionen Kl-basiertes Informationsverarbeitungssystem, Testverfahren, Eigenschaften der Sensordaten und/oder Kontext auf.

Ein Datensatz umfasst insbesondere Daten. Die Daten können insbesondere eindimensional oder mehrdimensional, insbesondere zweidimensional, sein. Beispielsweise können die Daten Bilder einer Kamera oder eines Lidarsensors sein. Prinzipiell können jedoch beliebige Sensordaten verwendet werden.

Eine Datenaugmentierungsdefinition definiert insbesondere eine Datenaugmentierung bzw. ein Datenaugmentierungsverfahren. Die Datenaugmentierungsdefinition gibt an, wie Daten des Datensatzes beim Erzeugen der multidimensionalen Datenstruktur verändert werden sollen. Es kann hierbei eine Vielzahl von Veränderungen vorgesehen sein. Beispielhaft genannt seien: Hinzufügen von Rauschen, Hinzufügen einer oder mehrerer adversarialer Störungen und/oder Sensorstörungen, Änderung eines Kontrastes, Änderung einer Helligkeit, Änderung von Farben, Änderung einer Witterungsbedingung (z.B. Hinzufügen von Schnee oder Regen in einem Kamerabild, das im Sommer bei Sonnenschein erfasst wurde). Eine Datenaugmentierung bzw. ein Datenaugmentierungsverfahren wird insbesondere in Abhängigkeit von physikalischen Sensoreigenschaften (Störungen etc.) und/oder möglichen physikalischen und/oder technischen Störungen der Sensorik und/oder möglichen adversarialen Störungen ausgestaltet bzw. definiert.

Eine Differenzmaßdefinition definiert insbesondere ein Differenzmaß. Das Differenzmaß gibt insbesondere an, wie Ausgangsdaten eines Kl-basierten Informationsverarbeitungssystems, die für (nicht augmentierte) Daten des Datensatzes erzeugt wurden, beim Erzeugen der multidimensionalen Datenstruktur mit Ausgangsdaten des Kl-basierten Informationsverarbeitungssystems, die für augmentierte Daten erzeugt wurden, verglichen werden sollen. Gibt das Kl-basierte Informationsverarbeitungssystem beispielsweise einen Vektor als Ausgangsdaten aus, so kann ein Differenzmaß den Vergleich der Vektoren umfassen, beispielsweise indem ein Unterschied zwischen den Vektoren bestimmt wird. Ein einfaches Beispiel für ein weiteres Differenzmaß ist das folgende: Gibt das Kl-basierte Informationsverarbeitungssystem beispielsweise als Ausgangsdaten aus, wie viele Fußgänger in einem erfassten Kamerabild vorhanden sind, so kann die jeweils für die Daten und die augmentierten Daten ausgegebene Anzahl miteinander verglichen werden (z.B. 3 Fußgänger gegenüber 5 Fußgängern, sodass der Differenzwert gleich 2 Fußgänger ist).

Sind in einem Datensatz zeitlich sequentielle Daten hinterlegt, so kann ein Differenzmaß sich auch auf zeitlich sequentielle, das heißt zeitlich benachbarte, Daten beziehen. Hierdurch kann eine Datenbasis zur Robustheitsbeurteilung bei der Verarbeitung von Videosequenzen (oder anderen zeitlich sequentiellen Daten) durch ein KI-basiertes Informationsverarbeitungssystem erzeugt und bereitgestellt werden. Beispielsweise kann im Rahmen der Robustheitsbeurteilung überprüft werden, ob ein Fußgänger in einer Videosequenz über mehrere Videoeinzelbilder hinweg von dem Kl-basierten Informationsverarbeitungssystem zuverlässig als Fußgänger erkannt wird oder nicht.

In der multidimensionalen Datenstruktur können insbesondere auch sämtliche beim Erzeugen der multidimensionalen Datenstruktur maßgeblichen Artefakte als Metadaten und/oder Header hinterlegt sein. Diese Artefakte umfassen beispielsweise: Verweise auf einen verwendeten Softwarecode, Verweise auf das mindestens eine KI-basierte Informationsverarbeitungssystem sowie zum Trainieren verwendete Hyperparameter, Verweise auf einen oder mehrere verwendete Datensätze (ggf. inkl. von Beschreibungsdaten) und/oder verwendete Anfangswerte für verwendete Zufallsgeneratoren ("Random Seeds").

Die multidimensionale Datenstruktur bildet insbesondere eine Art Testdatenbank, mit der Testergebnisse, die auf einem zentralen Server unter verschiedenen Bedingungen für verschiedene KI-basierte Informationsverarbeitungssysteme gewonnen wurden, um Testergebnisse, die im laufenden Betrieb während des Anwendens eines Kl-basierten Informationsverarbeitungssystems gemäß dem in dieser Offenbarung beschriebenen Verfahren gewonnen wurden, erweitert werden können. Mit Hilfe der Testergebnisse in der multidimensionalen Datenstruktur können die Kl-basierten Informationsverarbeitungssysteme hinsichtlich einer Robustheit verbessert beurteilt und bewertet werden. Insbesondere erlaubt die bereitgestellte multidimensionale Datenstruktur, unter gegebenen Randbedingungen (Eigenschaften der Sensordaten, Kontext etc.) ein robustes KI-basiertes Informationsverarbeitungssystem zur Anwendung auszuwählen.

Die multidimensionale Datenstruktur kann vor Durchführen des in dieser Offenbarung beschriebenen Verfahrens insbesondere auf einem zentralen Server beispielsweise durch ein Verfahren zum Bereitstellen einer Datenbasis zur Robustheitsbeurteilung mindestens eines Kl-basierten Informationsverarbeitungssystems erzeugt werden, wobei als Eingangsparameter mindestens ein Kl-basiertes Informationsverarbeitungssystem, mindestens ein Datensatz, mindestens eine Datenaugmentierungsdefinition und mindestens eine Differenzmaßdefinition empfangen werden, wobei basierend auf den Eingangsparametern eine multidimensionale Datenstruktur erzeugt wird, wobei die Dimensionen und Wertebereiche der Dimensionen der multidimensionalen Datenstruktur durch die empfangenen Eingangsparameter festgelegt sind, und wobei jeder Datenpunkt der multidimensionalen Datenstruktur einen mittels des mindestens einen definierten Differenzmaßes bestimmten Differenzwert umfasst, der bestimmt wird, indem das mindestens eine definierte Differenzmaß zwischen Ausgangsdaten gebildet wird, die von dem mindestens einen Kl-basierten Informationsverarbeitungssystem jeweils für Daten des mindestens einen Datensatzes und für dieselben mittels der mindestens einen definierten Datenaugmentierung augmentierten Daten erzeugt wurden, und wobei die erzeugte multidimensionale Datenstruktur bereitgestellt wird, sodass eine Robustheit des mindestens einen Kl-basierten Informationsverarbeitungssystems basierend auf den von der multidimensionalen Datenstruktur umfassten Differenzwerten beurteilt werden kann. Anschließend wird die multidimensionale Datenstruktur an die Vorrichtung übermittelt, um dort mittels des in dieser Offenbarung beschriebenen Verfahrens zum Überprüfen eines beim teilautomatisierten oder vollautomatisierten Steuern eines Fahrzeugs verwendeten Kl-basierten Informationsverarbeitungssystems um weitere Testergebnisse erweitert und/oder aktualisiert werden zu können.

Das Verfahren und die Vorrichtung können insbesondere in einem Fahrzeug angewendet werden. Ein Fahrzeug ist insbesondere ein Kraftfahrzeug. Ein Fahrzeug kann jedoch grundsätzlich auch ein anderes Land-, Wasser-, Luft oder Raumfahrzeug sein. Ein Luftfahrzeug ist insbesondere eine Drohne oder ein teilautomatisiertes oder automatisiertes Lufttaxi. Das Verfahren kann grundsätzlich auch im Produktions- oder Logistikbereich eingesetzt werden, z.B. beim Überwachen oder in der Robotik.

In einer Ausführungsform ist vorgesehen, dass es sich bei der Ausgabe um mindestens ein aus den Sensordaten durch das KI-basierte Informationsverarbeitungssystem klassifiziertes Objekt handelt oder um eine steuernde Ausgabe, wie einen Lenkwinkel, eine Geschwindigkeit oder eine Trajektorie, handelt.

In einer Ausführungsform ist vorgesehen, dass mindestens eine Kontextinformation eines Kontextes, in dem die Sensordaten erfasst werden, bestimmt wird, wobei zusätzlich zum Testergebnis die mindestens eine bestimmte Kontextinformation in der multidimensionalen Datenstruktur hinterlegt wird. Hierdurch können Testergebnisse in der multidimensionalen Datenstruktur hinterlegt werden, die mit einem Kontext, in dem die Sensordaten erfasst wurden, verknüpft sind. Zu einem späteren Zeitpunkt können für einen gegebenen Kontext bereits vorhandene Testergebnisse aus der multidimensionalen Datenstruktur abgerufen und zum Beurteilen und Bewerten einer Robustheit eines Kl-basierten Informationsverarbeitungssystems in dem gleichen Kontext verwendet werden. Dies erlaubt insbesondere eine kontextabhängige Beurteilung und Bewertung einer Robustheit eines Kl-basierten Informationsverarbeitungssystems. Ein Kontext kann insbesondere Informationen zu einem Umfeld, in dem die Sensordaten erfasst wurden, umfassen, z.B. eine Geschwindigkeit des Fahrzeugs, eine Tageszeit, einen Wochentag, eine Jahreszeit, eine Umgebung und/oder einen Ort (z.B. Stadt, Land, Spielstraße, Autobahn etc.) und/oder Witterungsbedingungen (z.B. Regen, Schnee, Nebel etc.). Das Bestimmen der mindestens einen Kontextinformation erfolgt beispielsweise mittels einer hierfür vorgesehenen Kontextbestimmungseinrichtung der Vorrichtung.

In einer Ausführungsform ist vorgesehen, dass Eigenschaften der erfassten Sensordaten bestimmt werden, wobei die bestimmten Eigenschaften zusätzlich zum Testergebnis in der multidimensionalen Datenstruktur hinterlegt werden. Hierdurch können Testergebnisse in der multidimensionalen Datenstruktur hinterlegt werden, die mit Eigenschaften der erfassten Sensordaten verknüpft sind. Zu einem späteren Zeitpunkt können für gleichartige Sensordaten, das heißt Sensordaten mit den gleichen Eigenschaften, bereits vorhandene Testergebnisse aus der multidimensionalen Datenstruktur abgerufen und zum Beurteilen und Bewerten einer Robustheit eines Kl-basierten Informationsverarbeitungssystems bei Zuführung der gleichartigen Sensordaten verwendet werden. Dies erlaubt insbesondere eine Beurteilung und Bewertung einer Robustheit eines Kl-basierten Informationsverarbeitungssystems in Abhängigkeit von Eigenschaften der Sensordaten. Eigenschaften der Sensordaten können beispielsweise eine oder mehrere der folgenden umfassen: eine Störung in den Sensordaten, wie beispielsweise eine adversariale Störung oder Rauschen, ferner photometrische Eigenschaften wie eine Helligkeit, ein Kontrast, eine Farbsättigung, ein Farbton etc. Die Eigenschaften der Sensordaten können beispielsweise mittels Verfahren der Computer Vision oder mittels trainierter Maschinenlernverfahren, wie beispielsweise Autoencoder oder Generative Adversarial Networks (GANs), bestimmt werden. Das Bestimmen der Eigenschaften erfolgt beispielsweise mittels einer hierfür vorgesehenen Eigenschaftsbestimmungseinrichtung und/oder mittels mindestens einer Störungserkennungseinrichtung der Vorrichtung.

Es ist in einer Alternative vorgesehen, dass das mindestens eine Testverfahren ein Überprüfen einer Konsistenz der mindestens einen Ausgabe im zeitlichen Verlauf umfasst. Hierdurch kann eine Zuverlässigkeit bzw. Robustheit von einer Ausgabe im zeitlichen Verlauf beurteilt werden. Insbesondere wird überprüft, inwieweit sich eine Ausgabe eines Kl-basierten Informationsverarbeitungssystems mit der Zeit ändert oder gleich bleibt. Hierbei kann beispielsweise überprüft und bewertet werden, ob die Ausgabe sich sprunghaft mit der Zeit ändert und/oder oszilliert etc. Dient das betrachtete KI-basierte Informationsverarbeitungssystem beispielsweise einer Objekterkennung und/oder Objektklassifikation in erfassten Kamerabildern, so kann für ein erkanntes Objekt überprüft werden, ob eine dem erkannten Objekt zugeordnete Objektklasse sich im Zeitverlauf ändert oder konstant bleibt. Ändert sich die Objektklasse mehrmals, so ist eine Konsistenz des KI-basierten Informationsverarbeitungssystems gering, bleibt die zugeordnete Objektklasse hingegen im Zeitverlauf konstant, so ist die Konsistenz hoch. Eine hohe Konsistenz spricht dafür, dass das Kl-basierte Informationsverarbeitungssystem unter den gegebenen Umständen (z.B. Eigenschaften der Sensordaten und/oder Kontext etc.) gut, das heißt robust, funktioniert. In der multidimensionalen Datenstruktur werden ein oder mehrere entsprechende Testergebnisse für das überprüfte KI-basierte Informationsverarbeitungssystem dann beispielsweise mit der Referenz auf das Testverfahren "(zeitliche) Konsistenz" hinterlegt.

Es ist in einer anderen Alternative alternativ oder zusätzlich vorgesehen, dass das mindestens eine Testverfahren ein Überprüfen einer Konfidenz der mindestens einen Ausgabe umfasst. Hierdurch lässt sich beurteilen, wie gut, das heißt wie zuverlässig bzw. robust, das Kl-basierte Informationsverarbeitungssystem, insbesondere unter den gegebenen Bedingungen, arbeitet.

Eine solche Konfidenz wird von dem Kl-basierten Informationsverarbeitungssystem selbst geschätzt und bereitgestellt. Handelt es sich bei dem Kl-basierten Informationsverarbeitungssystem beispielsweise um ein Neuronales Netz, welches eine Objektklassifizierung in erfassten Kameradaten durchführt, so liefert das Neuronale Netz als Ausgabe Schätzwerte für die verschiedenen Objektklassen. Ist einer Objektklasse ein hoher Schätzwert zugeordnet (z.B. 99 %), so ist die Konfidenz größer als wenn der Objektklasse nur ein geringerer Schätzwert zugeordnet ist (z.B. 30 %) und die restliche Wahrscheinlichkeit sich auf viele andere Objektklassen verteilt. In der multidimensionalen Datenstruktur werden ein oder mehrere entsprechende Testergebnisse für das überprüfte KI-basierte Informationsverarbeitungssystem dann beispielsweise mit der Referenz auf das Testverfahren "Konfidenz" hinterlegt. Ferner kann zusätzlich vorgesehen sein, dass das Testverfahren ein Bestimmen einer Konfidenz der mindestens einen Ausgabe umfasst.

In einer Ausführungsform ist vorgesehen, dass das mindestens eine Testverfahren ein Plausibilisieren der mindestens einen Ausgabe umfasst. Hierdurch kann eine Ausgabe eine Kl-basierten Informationsverarbeitungssystems mit Ausgaben anderer Kl-basierter Informationsverarbeitungssysteme und/oder einem (Gesamt-)Kontext abgeglichen werden. Auch können Ausgaben, die für erfasste Sensordaten unterschiedlicher Sensoren erzeugt wurden, miteinander abgeglichen werden. Bei einer großen Übereinstimmung der Ausgaben ist eine Plausibilität der Ausgabe des überprüften Kl-basierten Informationsverarbeitungssystems groß, bei geringer Übereinstimmung entsprechend geringer. In der multidimensionalen Datenstruktur werden ein oder mehrere entsprechende Testergebnisse für das überprüfte Kl-basierte Informationsverarbeitungssystem dann beispielsweise mit der Referenz auf das Testverfahren "Plausibilität" hinterlegt. Die Referenz kann hierbei weitere Informationen zu einer Art der Plausibilisierung umfassen.

In einer Ausführungsform ist vorgesehen, dass die multidimensionale Datenstruktur mit einer zentralen multidimensionalen Datenstruktur, die in einer zentralen Datenbank auf einem zentralen Server gespeichert ist und/oder mit einer dezentralen multidimensionalen Datenstruktur, die in einer dezentralen Datenbank eines anderen Fahrzeugs gespeichert ist, synchronisiert wird. Hierdurch können die neu gewonnenen Testergebnisse mit einer allgemeinen Infrastruktur, insbesondere mit anderen Fahrzeugen, geteilt werden. Auf diese Weise lässt sich eine Datenbasis zum Beurteilten und Bewerten einer Robustheit von Kl-basierten Informationsverarbeitungssystemen kontinuierlich erweitern und/oder aktualisieren. Das Synchronisieren umfasst hierbei insbesondere einen Informationenaustausch in beide Richtungen.

In einer Ausführungsform ist vorgesehen, dass das Kl-basierte Informationsverarbeitungssystem eine Funktion für das automatisierte Fahren des Fahrzeugs und/oder für eine Fahrerassistenz des Fahrzeugs und/oder für eine Umfelderfassung und/oder Umfeldwahrnehmung bereitstellt. Das Neuronale Netz ist ein tiefes Neuronales Netz, insbesondere ein Faltungsnetz.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Ferner wird insbesondere auch ein System zum Überprüfen eines beim teilautomatisierten oder vollautomatisierten Steuern eines Fahrzeugs verwendeten Kl-basierten Informationsverarbeitungssystems geschaffen, umfassend mindestens eine, insbesondere dezentrale, Vorrichtung zum Überprüfen eines beim teilautomatisierten oder vollautomatisierten Steuern eines Fahrzeugs verwendeten Kl-basierten Informationsverarbeitungssystems nach einer der beschriebenen Ausführungsformen, und einen zentralen Server, wobei in einer zentralen Datenbank auf dem zentralen Server mindestens eine multidimensionale Datenstruktur hinterlegt ist, und wobei der zentrale Server dazu eingerichtet ist, die multidimensionale Datenstruktur zu erzeugen und/oder an die, insbesondere dezentrale, Vorrichtung zu übermitteln und/oder die mindestens eine multidimensionale Datenstruktur mit einer multidimensionalen Datenstruktur der mindestens einen, insbesondere dezentralen, Vorrichtung zu synchronisieren.

Das Verfahren, die Vorrichtung und das System können als Teil einer Vorrichtung, eines Systems bzw. eines Verfahrens zum teilautomatisierten oder vollautomatisierten Steuern eines Fahrzeugs ausgestaltet sein.

Ein solches Verfahren sieht hierbei beispielsweise vor, dass mittels mindestens eines Sensors des Fahrzeugs Sensordaten zur Umfelderfassung bereitstellt werden, mittels eines in einem ersten Steuergerät des Fahrzeugs angeordneten Kl-basierten Informationsverarbeitungssystems die erfassten Sensordaten ausgewertet werden und ausgehend von den ausgewerteten Sensordaten mindestens eine Ausgabe zum teilautomatisierten oder vollautomatisierten Steuern des Fahrzeugs erzeugt wird und einer Steuereinheit des Fahrzeugs bereitgestellt wird, wobei mittels einer in einem zweiten Steuergerät des Fahrzeugs angeordneten Analyseeinrichtung Eigenschaften der Sensordaten und/oder ein aktueller Kontext, in dem die Sensordaten erfasst werden, bestimmt werden, wobei mittels einer in einem zweiten Steuergerät angeordneten Auswahleinrichtung das Kl-basierte Informationsverarbeitungssystem aus einer Mehrzahl von zur Verfügung stehenden Kl-basierten Informationsverarbeitungssystemen ausgewählt wird, wobei das Auswählen unter Verwendung einer multidimensionalen Datenstruktur erfolgt, in der zu der Mehrzahl der Kl-basierten Informationsverarbeitungssysteme jeweils Testergebnisse für jeweils mindestens ein Testverfahren in Abhängigkeit von Eigenschaften von Sensordaten und/oder in Abhängigkeit von einem Kontext hinterlegt sind und die in einer im Fahrzeug angeordneten Datenbank gespeichert ist, wobei ausgehend von der multidimensionalen Datenstruktur jeweils eine Robustheit der Mehrzahl der Kl-basierten Informationsverarbeitungssysteme unter der Bedingung, dass die bestimmten Eigenschaften und/oder der bestimmte Kontext vorliegen, bestimmt und bewertet wird, und wobei das robusteste KI-basierte Informationsverarbeitungssystem ausgewählt und zur Auswertung der erfassten Sensordaten in dem ersten Steuergerät verwendet wird.

Eine Robustheit wird insbesondere ausgehend von mindestens einer Robustheitsmetrik bestimmt. Die Robustheitsmetrik gibt insbesondere an, wie in der multidimensionalen Datenstruktur hinterlegte Testergebnisse (insbesondere Differenzwerte und Testergebnisse von unüberwachten Testverfahren) zu einem oder mehreren Robustheitswerten zusammengefasst werden sollen. Der oder die für die einzelnen Kl-basierten Informationsverarbeitungssysteme erhaltenen Robustheitswerte können anschließend miteinander und/oder mit einem Schwellenwert verglichen werden.

Die Vorrichtung kann dazu eingerichtet sein, auch das im voranstehenden Absatz beschriebene Verfahren zum teilautomatisierten oder vollautomatisierten Steuern eines Fahrzeugs mit dem Bereitstellen eines robusten Kl-basierten Informationsverarbeitungssystems auszuführen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Überprüfen eines beim teilautomatisierten oder vollautomatisierten Steuern eines Fahrzeugs verwendeten Kl-basierten Informationsverarbeitungssystems;
- Fig. 2: eine schematische Darstellung zur Verdeutlichung einer Einbettung des Verfahrens in ein System und ein Verfahren zum teilautomatisierten oder vollautomatisierten Steuern eines Fahrzeugs mit einem Bereitstellen von robusten Kl-basierten Informationsverarbeitungssystemen.

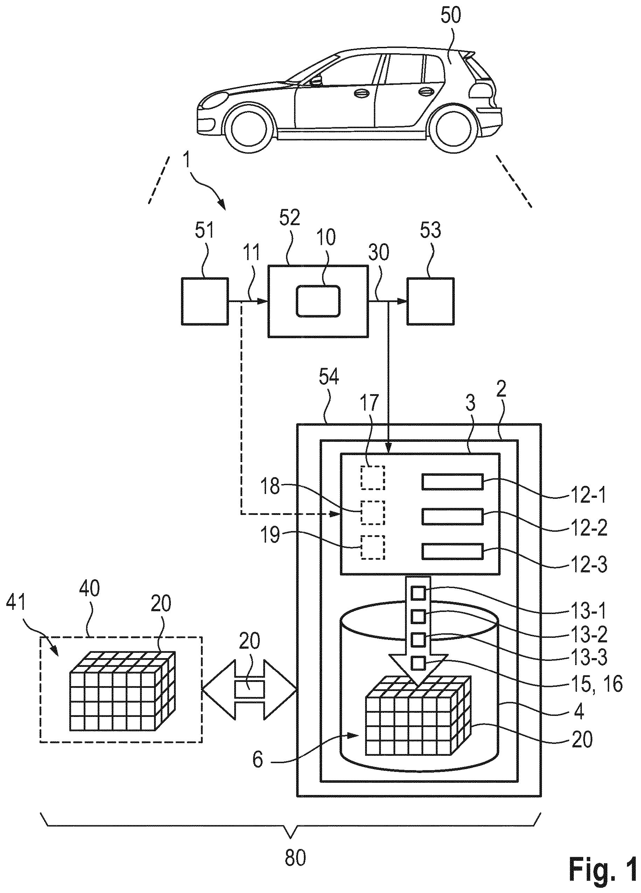

In Fig. 1 ist eine schematische Darstellung einer Ausführungsform der Vorrichtung 1 zum Überprüfen eines beim teilautomatisierten oder vollautomatisierten Steuern eines Fahrzeugs verwendeten Kl-basierten Informationsverarbeitungssystems 10 gezeigt. Das Kl-basierte Informationsverarbeitungsverfahren 10 wird in einem Fahrzeug 50 zur Sensordatenauswertung betrieben. Das Kl-basierte Informationsverarbeitungssystem 10 kann beispielsweise ein trainiertes tiefes Neuronales Netz sein.

Die Vorrichtung 1 umfasst einen Sensor 51, der dazu eingerichtet ist, Sensordaten 11 zur Umfelderfassung einer Umgebung des Fahrzeugs 50 bereitzustellen. Der Sensor 51 kann beispielsweise eine Kamera sein, mit der als Sensordaten 11 Kamerabilder eines Umfelds des Fahrzeugs 50 erfasst werden.

Ferner umfasst die Vorrichtung 1 ein in einem ersten Steuergerät 52 des Fahrzeugs 50 angeordnetes Kl-basierten Informationsverarbeitungssystem 10, welches dazu eingerichtet ist, die erfassten Sensordaten 11 auszuwerten und ausgehend von den ausgewerteten Sensordaten 11 mindestens eine Ausgabe 30 zum teilautomatisierten oder vollautomatisierten Steuern des Fahrzeugs 50 zu erzeugen und bereitzustellen. Es kann vorgesehen sein, dass das Steuergerät 52 Teil der Vorrichtung 1 ist.

Es kann hierbei vorgesehen sein, dass es sich bei der Ausgabe 30 um mindestens ein aus den Sensordaten 11 durch das KI-basierte Informationsverarbeitungssystem 10 klassifiziertes Objekt handelt oder um eine steuernde Ausgabe 30, wie einen Lenkwinkel, eine Geschwindigkeit oder eine Trajektorie, handelt.

Ferner umfasst die Vorrichtung 1 eine Steuereinheit 53, die die bereitgestellte Ausgabe 30 als Steuerparameter zum teilautomatisierten oder vollautomatisierten Steuern des Fahrzeugs 50 verwendet. Die Steuereinheit 53 ist beispielsweise ein Trajektorienplaner oder eine Aktoriksteuerung der Fahrzeugs 50.

Die Vorrichtung 1 umfasst ferner eine in einem zweiten Steuergerät 54 des Fahrzeugs 50 angeordnete Testeinrichtung 2. Das zweite Steuergerät 54 ist insbesondere Teil der Vorrichtung 1. Die Testeinrichtung 2 umfasst eine Recheneinrichtung 3 und einen Speicher 4.

Die Vorrichtung 1 ist insbesondere dazu eingerichtet, das in dieser Offenbarung beschriebene Verfahren zum Überprüfen eines beim teilautomatisierten oder vollautomatisierten Steuern eines Fahrzeugs 50 verwendeten Kl-basierten Informationsverarbeitungssystems 10 auszuführen.

Es ist insbesondere vorgesehen, dass das Kl-basierte Informationsverarbeitungssystem 10 eine Funktion für das automatisierte Fahren des Fahrzeugs 50 und/oder für eine Fahrerassistenz des Fahrzeugs 50 und/oder für eine Umfelderfassung und/oder Umfeldwahrnehmung bereitstellt.

Die Funktionsweise der Vorrichtung 1 ist beispielhaft für ein einziges Kl-basiertes Informationsverarbeitungssystem 10 gezeigt. Grundsätzlich können jedoch auch mehrere parallel betriebene KI-basierte Informationsverarbeitungssysteme 10 gleichzeitig überprüft werden.

Die Testeinrichtung 2 ist dazu eingerichtet, das Kl-basierte Informationsverarbeitungssystem 10 mittels mindestens eines Testverfahrens 12-x zu überprüfen, und ein Testergebnis 13-x des mindestens einen Testverfahrens 12-x mit einer Referenz zum getesteten Kl-basierten Informationsverarbeitungssystem 10 und zum verwendeten mindestens einen Testverfahren 12-x in einer multidimensionalen Datenstruktur 20 in einer im Fahrzeug 50 angeordneten Datenbank 6 zu speichern. Das mindestens eine Testverfahren 12-x ist insbesondere ein unüberwachtes Testverfahren.

Hierzu wird der Testeinrichtung 2 die mindestens eine Ausgabe 30 zugeführt. Dies erfolgt insbesondere fortlaufend bzw. kontinuierlich während des Anwendens des Kl-basierten Informationsverarbeitungssystems 10.

Es ist in einer Alternative vorgesehen, dass ein Testverfahren 12-1 ein Bestimmen und/oder ein Überprüfen einer Konsistenz der mindestens einen Ausgabe 30 im zeitlichen Verlauf umfasst. Hierzu werden Ausgaben 30 im zeitlichen Verlauf miteinander hinsichtlich einer Abweichung und/oder Übereinstimmung verglichen. Umfasst eine Ausgabe 30 beispielsweise eine von dem Kl-basierten Informationsverarbeitungssystem 10 geschätzte Objektklasse, so wird im Rahmen des Testverfahrens 12-1 überprüft, ob die für ein Objekt geschätzte Objektklasse sich im Zeitverlauf ändert oder nicht. Das Testergebnis 13-1 wird in der multidimensionalen Datenstruktur 20 hinterlegt.

Es ist in einer anderen Alternative alternativ oder zusätzlich vorgesehen, dass ein Testverfahren 12-2 ein Überprüfen einer Konfidenz der mindestens einen Ausgabe 30 umfasst. In der Regel umfassen die von Kl-basierten Informationsverarbeitungssystemen 10 erzeugten Ausgaben 30 Angaben zu Wahrscheinlichkeiten der jeweiligen Ausgabe 30. In einem Beispiel, in dem mittels eines Neuronalen Netzes Objektklassen für in Kamerabildern abgebildete Objekte geschätzt werden, liefert das Neuronale Netz für jede der möglichen Objektklassen als Ausgabe 30 eine Wahrscheinlichkeit dafür, dass das abgebildete Objekt zu einer der Objektklassen gehört. Diese Wahrscheinlichkeiten können als Konfidenz verwendet werden, um eine Zuverlässigkeit bzw. Robustheit des Neuronalen Netzes zu überprüfen. Das Testergebnis 13-2, das heißt die Konfidenz(en), wird in der multidimensionalen Datenstruktur 20 hinterlegt. Ferner kann zusätzlich vorgesehen sein, dass das Testverfahren 12-2 ein Bestimmen einer Konfidenz der mindestens einen Ausgabe 30 umfasst.

Es kann vorgesehen sein, dass ein Testverfahren 12-3 ein Plausibilisieren der mindestens einen Ausgabe 30 umfasst. Das Plausibilisieren kann anhand eines Kontextes und/oder anhand von Ausgaben 30 anderer KI-basierter Informationsverarbeitungssysteme 10 erfolgen.

Es kann vorgesehen sein, dass mindestens eine Kontextinformation 15 eines Kontextes, in dem die Sensordaten 11 erfasst werden, bestimmt wird, wobei zusätzlich zum Testergebnis 13-x die mindestens eine bestimmte Kontextinformation 15 in der multidimensionalen Datenstruktur 20 hinterlegt wird. Hierzu können dem zweiten Steuergerät 54, insbesondere der Recheneinrichtung 3, die erfassten Sensordaten 11 zugeführt werden, wobei mittels eines Mustererkennungsverfahrens, beispielsweise auf Grundlage eines trainierten Maschinenlernverfahrens, ein Kontext erkannt und die mindestens eine Kontextinformation 15 bestimmt wird. Eine Kontextinformation kann beispielsweise eine Information zu einem Ort (Stadt, Land, Autobahn, Spielstraße, Garageneinfahrt etc.), einer Zeit (Tag, Nacht, Sommer, Winter etc.) und/oder Umständen (Wetter, Lichtverhältnisse, Verkehrsaufkommen etc.) umfassen. Zum Bestimmen der mindestens einen Kontextinformation 15 umfasst die Vorrichtung 1, insbesondere die Recheneinrichtung 3, insbesondere eine Kontextbestimmungseinrichtung 19.

Es kann vorgesehen sein, dass Eigenschaften 16 der erfassten Sensordaten 11 bestimmt werden, wobei die bestimmten Eigenschaften 16 zusätzlich zum Testergebnis 13-x in der multidimensionalen Datenstruktur 20 hinterlegt werden. Handelt es sich bei dem Sensor 51 beispielsweise um eine Kamera, so können die Eigenschaften insbesondere photometrische Eigenschaften von erfassten Kamerabildern umfassen, beispielsweise eine Helligkeit, einen Kontrast etc. Zum Bestimmen der Eigenschaften 16 umfasst die Vorrichtung 1, insbesondere die Recheneinrichtung 3, insbesondere eine Eigenschaftsbestimmungseinrichtung 18. Ferner kann die Vorrichtung 1, insbesondere die Recheneinrichtung 3, eine Störungserkennungseinrichtung 17 zum Erkennen von adversarialen Störungen (als Eigenschaften der Sensordaten 11) umfassen.

In einer Ausführungsform ist vorgesehen, dass die multidimensionale Datenstruktur 20 mit einer zentralen multidimensionalen Datenstruktur 20, die in einer zentralen Datenbank 41 auf einem zentralen Server 40 gespeichert ist und/oder mit einer dezentralen multidimensionalen Datenstruktur 20, die in einer dezentralen Datenbank 6 eines anderen Fahrzeugs (nicht gezeigt) gespeichert ist, synchronisiert wird. Hierbei kann insbesondere vorgesehen sein, dass nur ein erweiterter und/oder geänderter Teil der multidimensionalen Datenstruktur 20 zum Synchronisieren übermittelt wird, um ein Datenvolumen zu reduzieren.

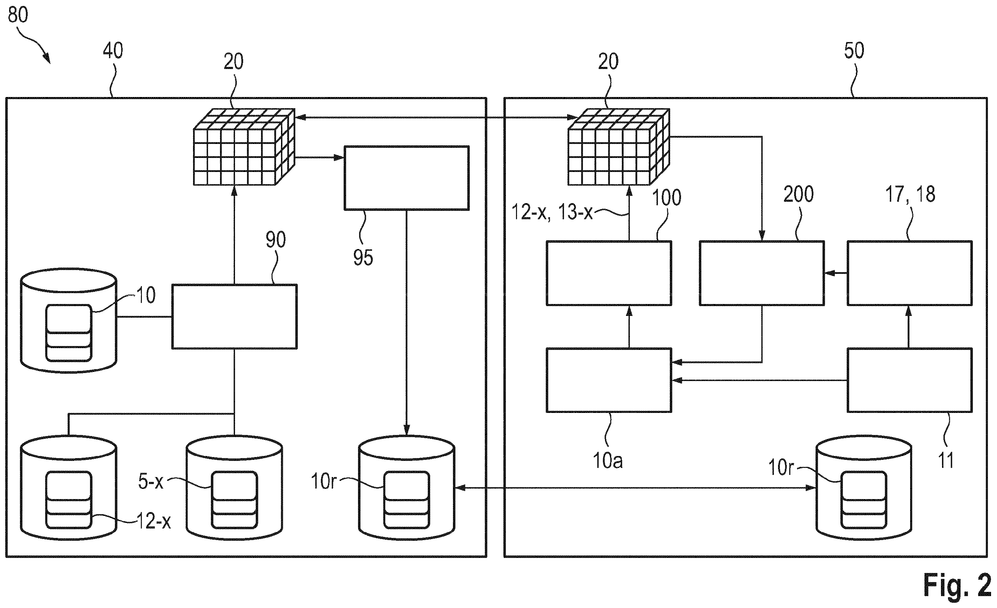

In Fig. 2 ist eine schematische Darstellung zur Verdeutlichung einer Einbettung des Verfahrens in ein System 80 und ein Verfahren zum teilautomatisierten oder vollautomatisierten Steuern eines Fahrzeugs 50 mit einem Bereitstellen von robusten Kl-basierten Informationsverarbeitungssystemen 10r gezeigt.

Im Rahmen des Verfahrens zum teilautomatisierten oder vollautomatisierten Steuern eines Fahrzeugs mit einem Bereitstellen von robusten Kl-basierten Informationsverarbeitungssystemen 10r wird ausgehend von einer Vielzahl von Kl-basierten Informationsverarbeitungssystemen 10, von verschiedenen Testverfahren 12-x und verschiedenen Datensätzen 5-x auf einem zentralen Server 40 eine multidimensionale Datenstruktur 20 erzeugt.

Dies erfolgt in einer Maßnahme 90, in welcher insbesondere ein Verfahren zum Bereitstellen einer Datenbasis zur Robustheitsbeurteilung mindestens eines Kl-basierten Informationsverarbeitungssystems 10 ausgeführt wird, wobei als Eingangsparameter mindestens ein KI-basiertes Informationsverarbeitungssystem 10, mindestens ein Datensatz 5-x, mindestens eine Datenaugmentierungsdefinition und mindestens eine Differenzmaßdefinition empfangen werden, wobei basierend auf den Eingangsparametern eine multidimensionale Datenstruktur 20 erzeugt wird, wobei die Dimensionen und Wertebereiche der Dimensionen der multidimensionalen Datenstruktur 20 durch die empfangenen Eingangsparameter festgelegt sind, und wobei jeder Datenpunkt der multidimensionalen Datenstruktur einen mittels des mindestens einen definierten Differenzmaßes bestimmten Differenzwert umfasst, der bestimmt wird, indem das mindestens eine definierte Differenzmaß zwischen Ausgangsdaten gebildet wird, die von dem mindestens einen Kl-basierten Informationsverarbeitungssystem 10 jeweils für Daten des mindestens einen Datensatzes 5-x und für dieselben mittels der mindestens einen definierten Datenaugmentierung augmentierten Daten erzeugt wurden, und wobei die erzeugte multidimensionale Datenstruktur 20 bereitgestellt wird, sodass eine Robustheit des mindestens einen Kl-basierten Informationsverarbeitungssystems 10 basierend auf den von der multidimensionalen Datenstruktur 20 umfassten Differenzwerten beurteilt werden kann.

Auf Grundlage der multidimensionalen Datenstruktur 20 und darin hinterlegter Testergebnisse (d.h. der Differenzwerte) und gegebenenfalls weiterer Metainformationen (Kontextinformationen, Eigenschaften der Sensordaten bzw. Datensätze etc.), können dann für spezifische Randbedingungen robuste KI-basierte Informationsverarbeitungssysteme 10r ermittelt werden, indem die Testergebnisse, insbesondere die hinterlegten Differenzwerte, in der multidimensionalen Datenstruktur 20 entsprechend ausgewertet werden. Hierzu können Testergebnisse, insbesondere die Differenzwerte, beispielsweise zusammengefasst und mit Schwellenwerten für eine Robustheit bzw. eine Zuverlässigkeit verglichen werden. Je nach Vergleichsergebnis wird das Kl-basierte Informationsverarbeitungssystem 10 als robust klassifiziert oder nicht.

Das Überprüfen und/oder Bewerten der Kl-basierten Informationsverarbeitungssysteme 10 auf dem zentralen Server 40 erfolgt in einer Maßnahme 95. In dieser Maßnahme 95 wird insbesondere ein Verfahren zum Bewerten und Zertifizieren einer Robustheit eines Kl-basierten Informationsverarbeitungssystems 10 ausgeführt, wobei zugehörig zu dem Kl-basierten Informationsverarbeitungssystem 10 die multidimensionale Datenstruktur 20 empfangen wird, wobei in der multidimensionalen Datenstruktur 20 jeweils zumindest mittels mindestens eines Differenzmaßes bestimmte Differenzwerte zwischen Ausgangsdaten des Kl-basierten Informationsverarbeitungssystems 10, die für Daten und augmentierte Daten erhalten wurden, in Abhängigkeit zumindest der Dimensionen Datensatz 5-x, Datenaugmentierungsdefinition(en) und Differenzmaßdefinition(en) hinterlegt sind, wobei aus zumindest einer Auswahl der Differenzwerte mindestens eine Robustheit des Kl-basierten Informationsverarbeitungssystems 10 bestimmt und mit mindestens einer Robustheitsanforderung verglichen wird, und wobei basierend auf einem Vergleichsergebnis das KI-basierte Informationsverarbeitungssystem 10 entweder verworfen, mit einer geänderten multidimensionalen Datenstruktur 20 erneut bewertet oder als robust zertifiziert wird. Dies erfolgt für alle Kl-basierten Informationsverarbeitungssysteme 10.

Die erzeugte multidimensionale Datenstruktur 20 und die in Maßnahme 95 als robust klassifizierten Kl-basierten Informationsverarbeitungssysteme 10r werden an mindestens ein Fahrzeug 50 übermittelt. Ein Fahrzeug 50 kann hierbei ein Testfahrzeug oder ein Serienfahrzeug sein.

In einer Maßnahme 100 wird das in dieser Offenbarung beschriebene Verfahren zum Überprüfen eines beim teilautomatisierten oder vollautomatisierten Steuern eines Fahrzeugs 50 verwendeten bzw. aktiven Kl-basierten Informationsverarbeitungssystems 10a während des Anwendens durchgeführt. Hierbei wird eine Ausgabe des aktiven Kl-basierten Informationsverarbeitungssystems 10a, wie bereits voranstehend beschrieben, mittels mindestens eines Testverfahrens 12-x überprüft. Erhaltene Testergebnisse werden in der multidimensionalen Datenstruktur 20 hinterlegt. Insbesondere wird die multidimensionale Datenstruktur 20 mit einer Referenz auf das aktive KI-basierte Informationsverarbeitungssystem 10a und auf das jeweils verwendete Testverfahren 12-x um die Testergebnisse 13-x ergänzt. Die multidimensionale Datenstruktur 20 kann anschließend mit der multidimensionalen Datenstruktur 20 auf dem zentralen Server 40 und/oder mit einer multidimensionalen Datenstruktur 20 anderer Fahrzeuge synchronisiert werden.

Es ist ferner in einer Maßnahme 200 vorgesehen, dass zum Auswerten von erfassten Sensordaten 11, beispielsweise mittels einer Kamera erfassten Kamerabildern, aus den Kl-basierten Informationsverarbeitungsverfahren 10 dasjenige Kl-basierte Informationsverarbeitungsverfahren 10 ausgewählt und aktiviert wird, das unter gegebenen Bedingungen (insbesondere Eigenschaften der Sensordaten und/oder ein gegebener Kontext) am robustesten ist. Eigenschaften in den Sensordaten 11 können beispielsweise mittels einer Eigenschaftserkennungseinrichtung 18 und/oder einer Störungserkennungseinrichtung 17 erkannt werden, welche beispielsweise adversariale Störungen in den Sensordaten 11 erkennt. Das Auswählen erfolgt hierbei auf Grundlage der in der multidimensionalen Datenstruktur 20 hinterlegten Testergebnisse 13-x, wobei auf Grundlage der jeweils hinterlegten Testergebnisse 13-x eine Robustheit von zur Auswertung in Frage kommenden Kl-basierten Informationsverarbeitungssystemen 10r bestimmt und bewertet wird. Insbesondere kann aus in der multidimensionalen Datenstruktur 20 hinterlegten Differenzwerten und/oder den Testergebnissen mindestens ein Robustheitsmaß bestimmt werden. Das bestimmte mindestens eine Robustheitsmaß kann mit mindestens einer Robustheitsanforderung verglichen werden. Das robusteste KI-basierte Informationsverarbeitungssystem 10r, beispielsweise dasjenige Kl-basierte Informationsverarbeitungssystem 10r mit dem höchsten Robustheitswert, wird dann zum Anwenden auf die aktuell erfassten Sensordaten 11 aktiviert und hierzu beispielsweise in einen Speicher eines ersten Steuergeräts 52 (Fig. 1) des Fahrzeugs 50 geladen oder in dem Steuergerät 52 zum Anwenden aktiviert und stellt dann das aktive KI-basierte Informationsverarbeitungssystem 10a bereit.

Das in Fig. 2 verdeutlichte System 80 bzw. Verfahren erlaubt das Verwenden des jeweils unter gegebenen Bedingungen (Eigenschaften der Sensordaten 11 und/oder ein Kontext etc.) robustesten Kl-basierten Informationsverarbeitungssystems 10r für die Auswertung der erfassten Sensordaten 11. Eine Auswahl wird hierbei insbesondere stets unter Berücksichtigung von aktuellen Bedingungen im Fahrzeug 50 getroffen. Mittels des in dieser Offenbarung beschriebenen Verfahrens und der zugehörigen Vorrichtung zum Überprüfen eines beim teilautomatisierten oder vollautomatisierten Steuern eines Fahrzeugs 50 verwendeten Kl-basierten Informationsverarbeitungssystems 10r kann die hierbei verwendete multidimensionale Datenstruktur 20 fortlaufend um weitere Testergebnisse von unüberwachten Testverfahren, die während des Anwendens eines gerade aktiven Kl-basierten Informationsverarbeitungssystems 10a erweitert werden. Auf diese Weise kann eine Datenbasis zum Überprüfen und/oder Bewerten einer Robustheit eines Kl-basierten Informationsverarbeitungssystems 10, 10r, 10a kontinuierlich bzw. schrittweise erweitert und/oder aktualisiert werden.

### Bezugszeichenliste

- 1: Vorrichtung
- 2: Testeinrichtung
- 3: Recheneinrichtung
- 4: Speicher
- 5-x: Datensatz
- 6: (dezentrale) Datenbank
- 10: Kl-basiertes Informationsverarbeitungssystem
- 10a: aktives Kl-basiertes Informationsverarbeitungssystem
- 10r: robustes KI-basiertes Informationsverarbeitungssystem
- 11: Sensordaten
- 12-x: Testverfahren
- 13-x: Testergebnis
- 15: Kontextinformation
- 16: Eigenschaft
- 17: Störungserkennungseinrichtung
- 18: Eigenschaftsbestimmungseinrichtung
- 19: Kontextbestimmungseinrichtung
- 20: multidimensionale Datenstruktur
- 30: Ausgabe
- 40: zentraler Server
- 41: (zentrale) Datenbank
- 50: Fahrzeug
- 51: Sensor
- 52: erstes Steuergerät
- 53: Steuereinheit
- 54: zweites Steuergerät
- 80: System
- 90: Maßnahme
- 95: Maßnahme
- 100: Maßnahme
- 200: Maßnahme

## Patentansprüche

1. Verfahren zum Überprüfen eines beim teilautomatisierten oder vollautomatisierten Steuern eines Fahrzeugs (50) verwendeten Kl-basierten Informationsverarbeitungssystems (10), wobei ein Kl-basiertes Informationsverarbeitungssystem (10) ein Informationsverarbeitungssystem ist, das auf einem Verfahren der Künstlichen Intelligenz basiert, wobei das Kl-basierte Informationsverarbeitungssystem (10) als tiefes Neuronales Netz ausgestaltet ist; wobei
- mindestens ein Sensor (51) des Fahrzeugs (50) Sensordaten (11) zur Umfelderfassung bereitstellt,
- mittels eines in einem ersten Steuergerät (52) des Fahrzeugs (50) angeordneten Kl-basierten Informationsverarbeitungssystems (10) die erfassten Sensordaten (11) ausgewertet werden und
- mittels des Kl-basierten Informationsverarbeitungssystems (10) ausgehend von den ausgewerteten Sensordaten (11) mindestens eine Ausgabe (30) zum teilautomatisierten oder vollautomatisierten Steuern des Fahrzeugs (50) erzeugt wird und
- einer Steuereinheit (53) des Fahrzeugs (50) bereitgestellt wird,
wobei mittels einer in einem zweiten Steuergerät (54) des Fahrzeugs (50) angeordneten Testeinrichtung (2) das Kl-basierte Informationsverarbeitungssystem (10) mittels mindestens eines Testverfahrens (12-x) überprüft wird, wobei der Testeinrichtung (2) hierzu während des Anwendens des Kl-basierten Informationsverarbeitungssystems (10) fortlaufend die mindestens eine Ausgabe (30) zugeführt wird, und
wobei ein Testergebnis (13-x) des mindestens einen Testverfahrens (12-x) mit einer Referenz zum getesteten Kl-basierten Informationsverarbeitungssystem (10) und zum verwendeten mindestens einen Testverfahren (12-x) in einer multidimensionalen Datenstruktur (20) in einer im Fahrzeug (50) angeordneten Datenbank (6) gespeichert wird,
wobei
i) das mindestens eine Testverfahren (12-x) ein Bestimmen und/oder ein Überprüfen einer Konsistenz der mindestens einen Ausgabe (30) im zeitlichen Verlauf umfasst, und/oder
ii) das mindestens eine Testverfahren (12-x) ein Überprüfen einer Konfidenz der mindestens einen Ausgabe (30) umfasst, wobei die Konfidenz von dem Kl-basierten Informationsverarbeitungssystem selbst geschätzt und bereitgestellt wird.

2. Verfahren nach Anspruch 1, wobei es sich bei der Ausgabe (30) um mindestens ein aus den Sensordaten (11) durch das Kl-basierte Informationsverarbeitungssystem (10) klassifiziertes Objekt handelt oder um eine steuernde Ausgabe (30), wie einen Lenkwinkel, eine Geschwindigkeit oder eine Trajektorie, handelt.

3. Verfahren nach Anspruch 1 oder 2, wobei mindestens eine Kontextinformation (15) eines Kontextes, in dem die Sensordaten (11) erfasst werden, bestimmt wird, wobei zusätzlich zum Testergebnis (13-x) die mindestens eine bestimmte Kontextinformation (15) in der multidimensionalen Datenstruktur (20) hinterlegt wird.

4. Verfahren nach einem der vorangegangenen Ansprüche, wobei Eigenschaften (16) der erfassten Sensordaten (11) bestimmt werden, wobei die bestimmten Eigenschaften (11) zusätzlich zum Testergebnis (13-x) in der multidimensionalen Datenstruktur (20) hinterlegt werden.

5. Verfahren nach einem der vorangegangenen Ansprüche, wobei das mindestens eine Testverfahren (12-x) ein Plausibilisieren der mindestens einen Ausgabe (30) umfasst.

6. Verfahren nach einem der vorangegangenen Ansprüche, wobei die multidimensionale Datenstruktur (20) mit einer zentralen multidimensionalen Datenstruktur (20), die in einer zentralen Datenbank (41) auf einem zentralen Server (40) gespeichert ist und/oder mit einer dezentralen multidimensionalen Datenstruktur (20), die in einer dezentralen Datenbank (6) eines anderen Fahrzeugs gespeichert ist, synchronisiert wird, sodass eine Datenbasis zum Beurteilen und Bewerten einer Robustheit von Kl-basierten Informationsverarbeitungssystemen kontinuierlich erweitert und/oder aktualisiert wird.

7. Verfahren nach einem der vorangegangenen Ansprüche, wobei das Kl-basierte Informationsverarbeitungssystem (10) eine Funktion für das automatisierte Fahren des Fahrzeugs (50) und/oder für eine Fahrerassistenz des Fahrzeugs (50) und/oder für eine Erfassung des Fahrzeugumfelds und/oder Wahrnehmung des Fahrzeugumfelds bereitstellt.

8. Vorrichtung (1) zum Überprüfen eines beim teilautomatisierten oder vollautomatisierten Steuern eines Fahrzeugs (50) verwendeten Kl-basierten Informationsverarbeitungssystems (10), wobei ein Kl-basiertes Informationsverarbeitungssystem (10) ein Informationsverarbeitungssystem ist, das auf einem Verfahren der Künstlichen Intelligenz basiert, wobei das Kl-basierte Informationsverarbeitungssystem (10) als tiefes Neuronales Netz ausgestaltet ist; mit zumindest einem Sensor (51), der dazu eingerichtet ist, Sensordaten (11) zur Umfelderfassung einer Umgebung des Fahrzeugs (50) bereitzustellen,
einem in einem ersten Steuergerät (52) des Fahrzeugs (50) angeordneten Kl-basierten Informationsverarbeitungssystem (10), welches dazu eingerichtet ist, die erfassten Sensordaten (11) auszuwerten und ausgehend von den ausgewerteten Sensordaten (11) mindestens eine Ausgabe (30) zum teilautomatisierten oder vollautomatisierten Steuern des Fahrzeugs (50) zu erzeugen und bereitzustellen,
einer Steuereinheit (53), die die bereitgestellte Ausgabe (30) als Steuerparameter zum teilautomatisierten oder vollautomatisierten Steuern des Fahrzeugs (50) verwendet, und einer in einem zweiten Steuergerät (54) des Fahrzeugs (50) angeordneten Testeinrichtung (2), welche dazu eingerichtet ist, das Kl-basierte Informationsverarbeitungssystem (10) mittels mindestens eines Testverfahrens (12-x) zu überprüfen, wobei die Vorrichtung (1) dazu eingerichtet ist, dass der Testeinrichtung (2) hierzu während des Anwendens des Kl-basierten Informationsverarbeitungssystems (10) fortlaufend die mindestens eine Ausgabe (30) zugeführt wird, und
ein Testergebnis (13-x) des mindestens einen Testverfahrens (12-x) mit einer Referenz zum getesteten Kl-basierten Informationsverarbeitungssystem (10) und zum verwendeten mindestens einen Testverfahren (12-x) in einer multidimensionalen Datenstruktur (20) in einer im Fahrzeug (50) angeordneten Datenbank (6) zu speichern,
wobei
i) das mindestens eine Testverfahren (12-x) ein Bestimmen und/oder ein Überprüfen einer Konsistenz der mindestens einen Ausgabe (30) im zeitlichen Verlauf umfasst,
und/oder
ii) das mindestens eine Testverfahren (12-x) ein Überprüfen einer Konfidenz der mindestens einen Ausgabe (30) umfasst, wobei die Konfidenz von dem Kl-basierten Informationsverarbeitungssystem selbst geschätzt und bereitgestellt wird.

9. System (80) zum Überprüfen eines beim teilautomatisierten oder vollautomatisierten Steuern eines Fahrzeugs (50) verwendeten Kl-basierten Informationsverarbeitungssystems (10), wobei das Kl-basierte Informationsverarbeitungssystem (10) ein Informationsverarbeitungssystem ist, das auf einem Verfahren der Künstlichen Intelligenz basiert, wobei das Kl-basierte Informationsverarbeitungssystem (10) als tiefes Neuronales Netz ausgestaltet ist;
umfassend mindestens eine Vorrichtung (1) nach Anspruch 8, und einen zentralen Server (40), wobei in einer zentralen Datenbank (41) auf dem zentralen Server (40) mindestens eine multidimensionale Datenstruktur (20) hinterlegt ist, und wobei der zentrale Server (40) dazu eingerichtet ist, die multidimensionale Datenstruktur (20) zu erzeugen und/oder an die Vorrichtung (1) zu übermitteln und/oder die mindestens eine multidimensionale Datenstruktur (20) mit einer multidimensionalen Datenstruktur (20) der mindestens einen Vorrichtung (1) zu synchronisieren, sodass eine Datenbasis zum Beurteilen und Bewerten einer Robustheit von Kl-basierten Informationsverarbeitungssystemen kontinuierlich erweitert und/oder aktualisiert wird.

## Claims

1. Method for checking an Al-based information processing system (10) used in semi-automated or fully automated control of a vehicle (50), wherein an Al-based information processing system (10) is an information processing system based on an artificial intelligence method, wherein the Al-based information processing system (10) is designed as a deep neural network; wherein
- at least one sensor (51) of the vehicle (50) provides sensor data (11) for environment detection,
- the detected sensor data (11) are evaluated by means of an Al-based information processing system (10) arranged in a first control device (52) of the vehicle (50) and
- at least one output (30) for the semi-automated or fully automated control of the vehicle (50) is generated based on the evaluated sensor data (11) by means of the Al-based information processing system (10) and
- is provided to a control unit (53) of the vehicle (50),
wherein the Al-based information processing system (10) is checked by means of a testing device (2), arranged in a second control device (54) of the vehicle (50), by means of at least one testing method (12-x), wherein the testing device (2) is continuously supplied with the at least one output (30) for this purpose during the use of the Al-based information processing system (10), and
wherein a test result (13-x) of the at least one testing method (12-x) is stored, with a reference to the tested Al-based information processing system (10) and to the at least one testing method (12-x) used, in a multidimensional data structure (20) in a database (6) arranged in the vehicle (50),
wherein
i) the at least one testing method (12-x) comprises determining and/or checking a consistency of at least one output (30) over the course of time,
and/or
ii) the at least one testing method (12-x) comprises checking a confidence of the at least one output (30), wherein the confidence is estimated and provided by the Al-based information processing system itself.

2. Method according to claim 1, wherein the output (30) is at least one object from the sensor data (11) classified by the Al-based information processing system (10) or is a controlling output (30), such as a steering angle, a speed or a trajectory.

3. Method according to claim 1 or claim 2, wherein at least one piece of context information (15) of a context in which the sensor data (11) are detected is determined, wherein the at least one determined piece of context information (15) is stored in the multidimensional data structure (20), in addition to the test result (13-x).

4. Method according to any of the preceding claims, wherein properties (16) of the detected sensor data (11) are determined, wherein the determined properties (11) are stored in the multidimensional data structure (20), in addition to the test result (13-x).

5. Method according to any of the preceding claims, wherein the at least one testing method (12-x) comprises checking the plausibility of the at least one output (30).

6. Method according to any of the preceding claims, wherein the multidimensional data structure (20) is synchronized with a centralized multidimensional data structure (20) stored in a centralized database (41) on a central server (40) and/or is synchronized with a decentralized multidimensional data structure (20) stored in a decentralized database (6) of another vehicle, so that a data basis for assessing and evaluating robustness of Al-based information processing systems is continuously expanded and/or updated.

7. Method according to any of the preceding claims, wherein the Al-based information processing system (10) provides a function for automated driving of the vehicle (50) and/or for driver assistance of the vehicle (50) and/or for detecting the environment of the vehicle and/or perceiving the environment of the vehicle.

8. Device (1) for checking an Al-based information processing system (10) used in semi-automated or fully automated control of a vehicle (50), wherein an Al-based information processing system (10) is an information processing system based on an artificial intelligence method, wherein the Al-based information processing system (10) is designed as a deep neural network; comprising at least one sensor (51) which is designed to provide sensor data (11) for environment detection of an environment of the vehicle (50),
an Al-based information processing system (10) arranged in a first control device (52) of the vehicle (50), which Al-based information processing system is designed to evaluate the detected sensor data (11) and, based on the evaluated sensor data (11), to generate and provide at least one output (30) for the semi-automated or fully automated control of the vehicle (50),
a control unit (53) which uses the provided output (30) as a control parameter for the semi-automated or fully automated control of the vehicle (50), and a testing device (2) which is arranged in a second control device (54) of the vehicle (50) and is designed to check the Al-based information processing system (10) by means of at least one testing method (12-x), wherein the device (1) is designed such that the testing device (2) is continuously supplied with the at least one output (30) for this purpose during the use of the Al-based information processing system (10), and
that a test result (13-x) of the at least one testing method (12-x) is stored, with a reference to the tested Al-based information processing system (10) and to the at least one testing method (12-x) used, in a multidimensional data structure (20) in a database (6) arranged in the vehicle (50),
wherein
i) the at least one testing method (12-x) comprises determining and/or checking a consistency of at least one output (30) over the course of time,
and/or
ii) the at least one testing method (12-x) comprises checking a confidence of the at least one output (30), wherein the confidence is estimated and provided by the Al-based information processing system itself.

9. System (80) for checking an Al-based information processing system (10) used in semi-automated or fully automated control of a vehicle (50), wherein the Al-based information processing system (10) is an information processing system based on an artificial intelligence method, wherein the Al-based information processing system (10) is designed as a deep neural network; comprising at least one device (1) according to claim 8, and
a central server (40), wherein at least one multidimensional data structure (20) is stored in a centralized database (41) on the central server (40), and wherein the central server (40) is designed to generate the multidimensional data structure (20) and/or transmit it to the device (1) and/or to synchronize the at least one multidimensional data structure (20) with a multidimensional data structure (20) of the at least one device (1), so that a database for assessing and evaluating the robustness of Al-based information processing systems is continuously expanded and/or updated.

## Revendications

1. Procédé permettant la vérification d'un système de traitement d'informations basé sur l'IA (10) utilisé lors de la commande semi-automatisée ou entièrement automatisée d'un véhicule (50), dans lequel un système de traitement d'informations basé sur l'IA (10) est un système de traitement d'informations qui se base sur un procédé d'intelligence artificielle, dans lequel le système de traitement d'informations basé sur l'IA (10) est conçu sous forme de réseau neuronal profond ; dans lequel
- au moins un capteur (51) du véhicule (50) fournit des données de capteur (11) pour la détection d'environnement,
- au moyen d'un système de traitement d'informations basé sur l'IA (10) disposé dans un premier appareil de commande (52) du véhicule (50), les données de capteur (11) détectées sont évaluées, et
- au moyen du système de traitement d'informations basé sur l'IA (10), à partir des données de capteur (11) évaluées, au moins une sortie (30) est générée pour la commande semi-automatisée ou entièrement automatisée du véhicule (50), et
- une unité de commande (53) du véhicule (50) est fournie,
dans lequel, au moyen d'un équipement de test (2) disposé dans un second appareil de commande (54) du véhicule (50), le système de traitement d'informations basé sur l'IA (10) est vérifié au moyen d'au moins un procédé de test (12-x), dans lequel l'au moins une sortie (30) est amenée en continu à l'équipement de test (2) à cet effet pendant l'utilisation du système de traitement d'informations basé sur l'IA (10), et
dans lequel un résultat de test (13-x) de l'au moins un procédé de test (12-x) est mémorisé avec une référence au système de traitement d'informations basé sur l'IA (10) testé et au moins un procédé de test (12-x) utilisé dans une structure de données multidimensionnelle (20) dans une base de données (6) disposée dans le véhicule (50),
dans lequel
i) l'au moins un procédé de test (12-x) comprend une détermination et/ou une vérification d'une cohérence de l'au moins une sortie (30) dans le temps,
et/ou
ii) l'au moins un procédé de test (12-x) comprend une vérification d'un niveau de confiance de l'au moins une sortie (30), dans lequel le niveau de confiance est estimé et fourni par le système de traitement d'informations basé sur l'IA lui-même.

2. Procédé selon la revendication 1, dans lequel la sortie (30) est au moins un objet classé à partir des données de capteur (11) par le système de traitement d'informations basé sur l'IA (10) ou est une sortie (30) commandée telle qu'un angle de braquage, une vitesse ou une trajectoire.

3. Procédé selon la revendication 1 ou 2, dans lequel au moins une information de contexte (15) d'un contexte dans lequel les données de capteur (11) sont détectées est déterminée, dans lequel, en plus du résultat de test (13-x), l'au moins une information de contexte (15) déterminée est déposée dans la structure de données multidimensionnelle (20).

4. Procédé selon l'une des revendications précédentes, dans lequel des propriétés (16) des données de capteur (11) détectées sont déterminées, dans lequel les propriétés (11) déterminées sont déposées en plus du résultat de test (13-x) dans la structure de données multidimensionnelle (20).

5. Procédé selon l'une des revendications précédentes, dans lequel l'au moins un procédé de test (12-x) comprend un contrôle de plausibilité de l'au moins une sortie (30).

6. Procédé selon l'une des revendications précédentes, dans lequel la structure de données multidimensionnelle (20) est synchronisée avec une structure de données multidimensionnelle (20) centrale mémorisée dans une base de données centrale (41) sur un serveur central (40) et/ou avec une structure de données multidimensionnelle (20) décentralisée mémorisée dans une base de données décentralisée (6) d'un autre véhicule, de sorte qu'une base de données pour juger et évaluer une robustesse de systèmes de traitement d'informations basés sur l'IA est continuellement étendue et/ou mise à jour.

7. Procédé selon l'une des revendications précédentes, dans lequel le système de traitement d'informations basé sur l'IA (10) fournit une fonction pour la conduite automatisée du véhicule (50) et/ou pour une aide à la conduite du véhicule (50) et/ou pour une détection de l'environnement de véhicule et/ou une perception de l'environnement de véhicule.

8. Dispositif (1) permettant la vérification d'un système de traitement d'informations basé sur l'IA (10) utilisé lors de la commande semi-automatisée ou entièrement automatisée d'un véhicule (50), dans lequel un système de traitement d'informations basé sur l'IA (10) est un système de traitement d'informations qui se base sur un procédé d'intelligence artificielle, dans lequel le système de traitement d'informations basé sur l'IA (10) est conçu sous forme de réseau neuronal profond ; comportant au moins un capteur (51) qui est configuré pour fournir des données de capteur (11) pour la détection d'environnement d'un environnement de véhicule (50),
un système de traitement d'informations basé sur l'IA (10), disposé dans un premier appareil de commande (52) du véhicule (50), qui est configuré pour évaluer les données de capteur (11) détectées et, à partir des données de capteur (11) évaluées, pour générer et fournir au moins une sortie (30) pour la commande semi-automatisée ou entièrement automatisée du véhicule (50),
une unité de commande (53) qui utilise la sortie (30) fournie comme paramètre de commande pour la commande semi-automatisée ou entièrement automatisée du véhicule (50), et un équipement de test (2) disposé dans un second appareil de commande (54) du véhicule (50) et qui est configuré pour vérifier le système de traitement d'informations basé sur l'IA (10) au moyen d'au moins un procédé de test (12-x), dans lequel le dispositif (1) est configuré de sorte que l'au moins une sortie (30) est amenée en continu à l'équipement de test (2) à cet effet pendant l'utilisation du système de traitement d'informations basé sur l'IA (10), et
un résultat de test (13-x) de l'au moins un procédé de test (12-x) est mémorisé avec une référence au système de traitement d'informations basé sur l'IA (10) testé et au moins un procédé de test (12-x) utilisé dans une structure de données multidimensionnelle (20) dans une base de données (6) disposée dans le véhicule (50),
dans lequel
i) l'au moins un procédé de test (12-x) comprend une détermination et/ou une vérification d'une cohérence de l'au moins une sortie (30) dans le temps,
et/ou
ii) l'au moins un procédé de test (12-x) comprend une vérification d'un niveau de confiance de l'au moins une sortie (30), dans lequel le niveau de confiance est estimé et fourni par le système de traitement d'informations basé sur l'IA lui-même.

9. Système (80) permettant la vérification d'un système de traitement d'informations basé sur l'IA (10) utilisé lors de la commande semi-automatisée ou entièrement automatisée d'un véhicule (50), dans lequel le système de traitement d'informations basé sur l'IA (10) est un système de traitement d'informations qui est basé sur un procédé d'intelligence artificielle, dans lequel le système de traitement d'informations basé sur l'IA (10) est conçu sous forme de réseau neuronal profond ; comprenant au moins un dispositif (1) selon la revendication 8, et
un serveur central (40), dans lequel au moins une structure de données multidimensionnelle (20) est déposée dans une base de données centrale (41) sur le serveur central (40), et dans lequel le serveur central (40) est configuré pour générer la structure de données multidimensionnelle (20) et/ou la transmettre au dispositif (1) et/ou synchroniser l'au moins une structure de données multidimensionnelle (20) avec une structure de données multidimensionnelle (20) de l'au moins un dispositif (1), de sorte qu'une base de données pour juger et évaluer une robustesse de systèmes de traitement d'informations basés sur l'IA est continuellement étendue et/ou mise à jour.
